# EUROPEAN PATENT APPLICATION

(11) **EP 4 773 010 A1**
(43) Date of publication of application: **08.07.2026**
(21) Application number: 25223440.6
(22) Date of filing: 15.12.2025
(51) Int. Cl.: G06F 11/00, G06N 3/09, G06N 20/00

(54) **TUNING ANOMALY DETECTION CONDITIONS**

(30) Priority: 02.01.2025 US 202519007803
(71) Applicant: Microsoft Technology Licensing, LLC, Redmond, WA 98052 (US)
(72) Inventor: BOUÉ, Laurent, Redmond, Washington, 98052 (US); RAMA, Kiran, Redmond, Washington, 98052 (US); DIXIT, Vini, Redmond, Washington, 98052 (US)
(74) Representative: CMS Cameron McKenna Nabarro Olswang LLP

(57) **Abstract**

An anomaly detection model is tuned by training an anomaly detection condition tuning model using features of training input data provided to the anomaly detection model, training anomaly detection conditions used by the anomaly detection model to identify a detected anomaly in the training input data, and training data feedback identifying the detected anomaly as true or false. A first tuned training data condition is extracted for each feature by executing the anomaly detection condition tuning model on the features. A condition regression model is trained using second training data including the features of the training input data and each first tuned training data condition. Second tuned anomaly detection conditions are generated by executing the condition regression model on the new input data. The anomaly detection model is executable on the new input data using the second tuned anomaly detection conditions to identify an anomaly in the new input data.

## Description

### Background

The deployment of artificial intelligence assistant systems is expected to trigger a productivity boom. Unfortunately, assessing the performance of such systems presents challenges because the tasks these systems are intended to solve tend to be very context-dependent, unsupervised, and generally lacking in ground truths.

### Summary

In some aspects, the techniques described herein relate to a computerized method of tuning an anomaly detection model, the computerized method including: training an anomaly detection condition tuning model using first training data including features of training input data provided to the anomaly detection model, training anomaly detection conditions used by the anomaly detection model to identify a detected anomaly in the training input data, and training data feedback identifying the detected anomaly in the training input data as true or false; extracting a first tuned training data condition for each feature of the training input data by executing the anomaly detection condition tuning model, after training, on the features of the training input data; training a condition regression model using second training data including the features of the training input data and each first tuned training data condition corresponding to the features of the training input data; and generating second tuned anomaly detection conditions corresponding to the features of new input data by executing the condition regression model, after training, on the new input data.

In some aspects, the techniques described herein relate to a computing system for tuning an anomaly detection model, the computing system including: one or more hardware processors; memory; an anomaly detection condition tuning model stored in the memory and executable by the one or more hardware processors; an anomaly detection condition tuning model generator stored in the memory, executable by the one or more hardware processors, and configured to train the anomaly detection condition tuning model using first training data including features of training input data provided to the anomaly detection model, training anomaly detection conditions used by the anomaly detection model to identify a detected anomaly in the training input data, and training data feedback identifying the detected anomaly in the training input data as true or false, wherein the anomaly detection condition tuning model is trained to extract a first tuned training data condition for each feature of the training input data by executing the anomaly detection condition tuning model, after training, on the features of the training input data; a condition regression model stored in the memory and executable by the one or more hardware processors; and a regression model generator stored in the memory, executable by the one or more hardware processors, and configured to train the condition regression model using second training data including the features of the training input data and each first tuned training data condition corresponding to the features of the training input data, wherein the condition regression model is trained to generate second tuned anomaly detection conditions corresponding to the features of new input data by executing the condition regression model, after training, on the new input data, wherein the anomaly detection model is configured to execute on the new input data using the second tuned anomaly detection conditions generated by the condition regression model to identify an anomaly in the new input data.

In some aspects, the techniques described herein relate to one or more tangible processor-readable storage media embodied with instructions for executing on one or more processors and circuits of a computing device a process for tuning an anomaly detection model, the process including: extracting a first tuned training data condition for each feature of training input data by executing an anomaly detection condition tuning model on features of the training input data, wherein the anomaly detection condition tuning model is trained using first training data including the features of the training input data provided to the anomaly detection model, training anomaly detection conditions used by the anomaly detection model to identify a detected anomaly in the training input data, and training data feedback identifying the detected anomaly in the training input data as true or false; and generating second tuned anomaly detection conditions corresponding to the features of new input data by executing a condition regression model on the new input data, wherein a condition regression model is trained using second training data including the features of the training input data and each first tuned training data condition corresponding to the features of the training input data.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

### Brief Descriptions of the Drawings

FIG. 1 illustrates a computerized system for incorporating feedback about detected anomalies (e.g., whether an anomaly raised by an existing anomaly detection model is a true alarm or a false alarm) into the anomaly detection operation.
FIG. 2 illustrates an example anomaly detection system with more details than shown in FIG. 1.
FIG. 3 illustrates example operations for tuning an anomaly detection model in a computerized method.
FIG. 4 illustrates an example computing device for use in implementing the described technology.

### Detailed Descriptions

Anomaly detection is a staple of modern monitoring and forecasting technologies because they can identify the existence of unusual data in a data set, such as unusual network activity, fraudulent transactions, unusual market behavior, abnormal patient conditions, unusual patterns in medical data, defects in manufactured products, malicious computing processes (e.g., malware), equipment malfunctions, unusual customer behavior, and unusual sales patterns. Anomaly detection is also useful in a wide range of other industries and applications. Generally, a goal of anomaly detection is to proactively manage risks and enhance decision-making by predicting future data points and determining whether the actual (e.g., measured) data points diverge from the predicted data points enough to be deemed an anomaly.

Typically, anomaly detection models include, without limitation, two stages:
1. Forecasting an anomaly score (e.g., via univariate or multivariate methods) and
2. Identifying anomalies by estimating uncertainty in the anomaly score.

Uncertainty estimation is dominated by Bayesian techniques (e.g., Markov Chain Monte Carlo - MCMC sampling) and/or auto-adaptive techniques, both of which use past information about the entities of interest in order to estimate confidence intervals around the forecasts. These methods tend to be purely statistical and are, therefore, somewhat focused on the data itself and divorced from real-world considerations. For example, as statistically sophisticated as these methods may be, they do not introduce feedback data from individual consumers of the anomalies. What is an anomaly to one consumer (e.g., an R&D department) in a given situation (e.g., during a production run) may not be an anomaly to that same consumer in a different situation (e.g., during experimental runs) or to a different consumer (e.g., a manufacturing department) in the same situation. Accordingly, a statistical anomaly may not qualify as something of concern to all parties under real-world conditions (e.g., not a business-relevant anomaly).

The described technology provides a method of directly incorporating feedback about detected anomalies (e.g., whether an anomaly raised by an existing anomaly detection model is a true alarm or a false alarm) into the anomaly detection operation. Specifically, in at least one implementation, individual anomaly detection conditions (e.g., anomaly detection thresholds) are tuned for individual consumers of the anomalies based on past feedback and other data provided by such consumers. ("Consumers" in this context refers to users or entities that receive the data in which an anomaly exists.)

In this manner, the described technology provides a technical benefit of fine-tuning individual anomaly detection conditions used to distinguish data that is considered to be an anomaly to one consumer and/or for one situation from similar data that is not considered to be an anomaly to another consumer and/or for another situation. In this manner, anomaly detection conditions can be specified and applied for each consumer, tuning the anomaly detection to the objectives of that consumer. Resources, including a consumer's labor in monitoring anomaly detect, can be conserved by reducing false positives received by the consumer, as specified by that consumer's past feedback.

Furthermore, the anomaly detection conditions for a new input data set are further tuned on the data of the new input data set before the anomaly detection operation. In this manner, the anomaly detection conditions of the anomaly detection model are tuned for each new data set that is input to the anomaly detection model. This approach provides a technical benefit of customizing the anomaly detection conditions (and, therefore, the anomaly detection model) for the input data being evaluated.

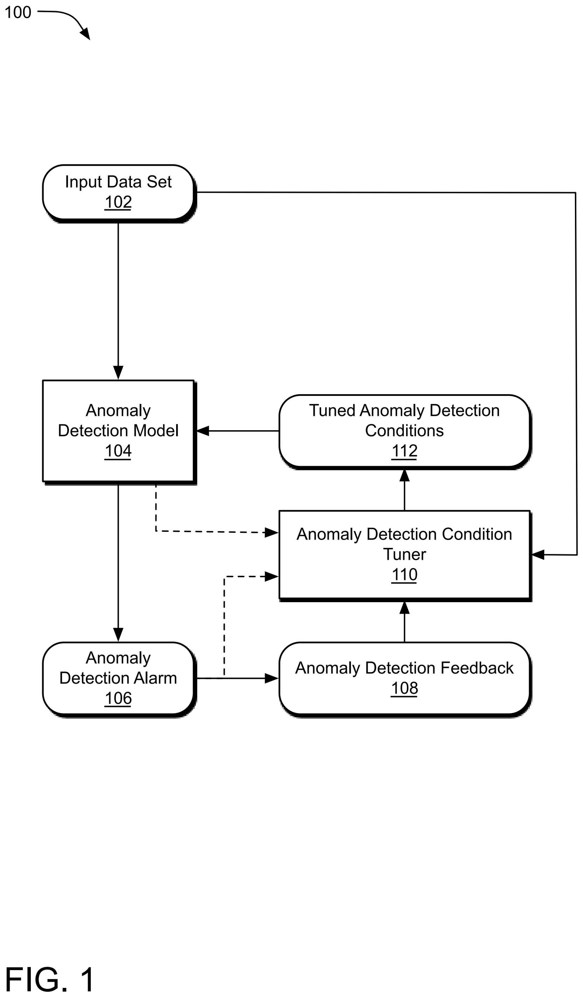

FIG. 1 illustrates a computerized system 100 for incorporating feedback about detected anomalies (e.g., whether an anomaly raised by an existing anomaly detection model is a true alarm or a false alarm) into the anomaly detection operation. An input data set 102 includes data points, events, measurements, observations, etc. For example, the input data set 102 may include production data for microelectronic chip manufacturing, such as the number of chips started each date, the number of chips manufactured each day, the daily yield, etc. It should be understood, however, that the input data need not be a time series and may be allocated against other metrics, such as parts-per-million, car accidents per zip code, etc.

The input data set 102 is input to an anomaly detection model 104 designed to identify patterns or instances in data that deviate significantly from the expected behavior. Such deviant patterns can be described as anomalies that can be detected by an anomaly detection model. An example of the anomaly detection model 104 may include one or more components including, without limitation:
- a data preprocessing component to perform data cleaning (e.g., removing noise and handling missing values to enhance data quality),
- a normalization component to scale the data to a common range to encourage that features contribute equally to the detection process,
- a feature engineering component to identify relevant features that can help in detecting anomalies,
- a feature extraction component to create new features from raw data to capture important patterns,
- a model training component to execute unsupervised learning for models that do not require labeled data, such as clustering (e.g., k-means) or autoencoders,
- a supervised learning component to train models that require labeled data, such as classification algorithms (e.g., SVM, Random Forest) trained on known anomalies,
- a semi-supervised learning component (e.g., a clustering algorithm, an autoencoder, an SVM, generative adversarial networks) to combine both labeled and unlabeled data to improve detection accuracy,
- a detection component to execute statistical methods, such as z-score or Mahalanobis distance, to identify outliers based on statistical properties,
- other machine learning models involving algorithms that may include, without limitation, isolation forest, one-class support vector machines, or neural networks that can learn complex patterns in data to improve detection accuracy in certain domains,
- performance metrics components, such as precision, recall, F1-score, and receiver operating characteristic-area under the curve (ROC-AUC) techniques for evaluating model performance,
- cross-validation components employing techniques such as k-fold cross-validation to assess the model's generalization ability,
- a deployment component performing real-time monitoring by implementing the model in a system to monitor incoming data and detect anomalies in real-time and/or performing alerts and reporting using alert mechanisms to notify stakeholders when anomalies are detected.

The output of the anomaly detection model 104 is an anomaly detection alarm 106, which indicates whether an anomaly was detected. In some implementations and input data sets, the anomaly detection alarm 106 may indicate that an anomaly was not detected or may simply stay silent to indicate that no anomaly was detected. The anomaly detection alarm 106 may also include consumer data feature vectors (Xᵢ), such as data features from the input data set 102 and deltas between predicted and actual features from the anomaly detection model 104, and anomaly detection condition vectors (Tᵢ) applied during the execution of the anomaly detection model 104 on the input data set 102 may be communicated from the anomaly detection model 104, for example, to an anomaly detection condition tuner 110 or may be included as part of the anomaly detection alarm 106.

In some implementations, the consumer data feature vectors (Xᵢ) and anomaly detection condition vectors (Tᵢ) are communicated to the anomaly detection condition tuner 110 via recorded telemetry by another application (e.g., a data collection application, a user feedback application, a testing application). Whenever there is an output from anomaly detection model 104, a separate system logs the relevant information that may then be fetched on demand by the anomaly detection condition tuner 110.

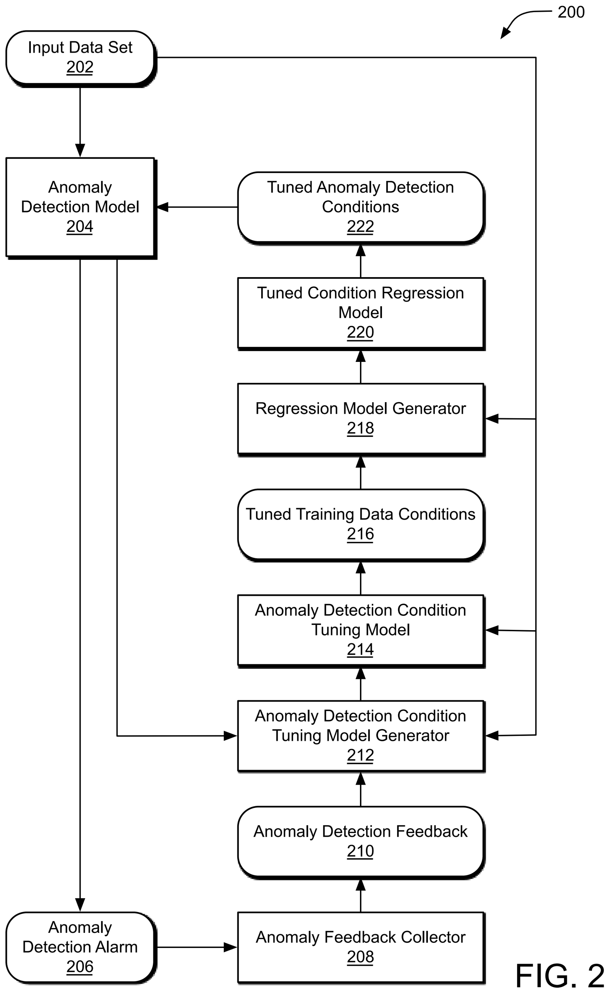

As previously discussed, the anomaly detection alarm 106 may be statistically correct, but the anomaly detected may not be a consumer-relevant anomaly. Generally, the anomaly may or may not be identified as "relevant" to the given consumer of the data because that consumer faces different levels of tolerance than other consumers. For example, a 5% deviation from a predicted data trend may be considered relevant in a power generation monitoring system but not in a weather forecasting system. A determination that the detected anomaly is or is not relevant may be received from a user and/or generated by a monitoring system (as provided by an anomaly feedback collector 208 in FIG. 2) as anomaly detection feedback 108. For example, a user with knowledge of which anomalies are of real concern may dismiss the anomaly detection alarm 106, or a monitoring system may evaluate the anomaly detection alarm 106 and delete it because the monitoring system possesses information that the detected anomaly is of no real concern (e.g., the anomaly arose during a test run with experimental parameters).

The input data set 102, the anomaly detection feedback 108, and, in some implementation, the anomaly detection alarm 106 (depending on whether it contains some or all of the input data set 102, the consumer data features, and/or the anomaly detect conditions used in the detection) are input to the anomaly detection condition tuner 110, which evaluates these inputs and tunes the anomaly detection conditions (e.g., tuned anomaly detection conditions 112) to better correlate the anomaly detection in by the anomaly detection model 104 to the anomaly detection feedback 108. For example, a threshold or range of anomaly scores may be deemed a relevant anomaly for one consumer but not for another consumer, so tuning the anomaly detection condition allows per-consumer tuning. In this manner, the anomaly detection model 104 is tuned to better reflect the relevance of detected anomalies based on the anomaly detection feedback 108.

It should be understood that a tuned anomaly detection condition may be in various forms. For example, the form of a maximum threshold above which an anomaly score would indicate a true anomaly and below which an anomaly score would indicate a false anomaly. Other example conditions may include, without limitation, ranges, minimum threshold (below which an anomaly score would indicate a true anomaly and above which an anomaly score would indicate a false anomaly), a statistical condition (e.g., within a standard deviation of a value), etc.

Some of the descriptions herein are based on certain assumptions:
- an entity *E* whose evolution is indexed by a variable *t.* Note that *t* does not necessarily represent timestamp (e.g., *t* could represent geographic regions, a number of an element in a set), although a time series would be the most common application, and
- an existing anomaly detection model, denoted *M*, that aims to detect anomalous events in *E*

Anomaly detection models may be built as two-stage processes, where:
- the first stage makes a forecast for the value of *E* at an index i, and
- the second stage checks whether this forecasted value *E* lies within a confidence band around the actual input data value. If the forecasted value falls outside of this band (above or below), an anomaly is raised (e.g., indicated by an alarm).

The width of this band may be denoted as an anomaly detection condition T (and may be a multidimensional vector in case the band is not symmetric above/below). The features used by the model *M* to raise anomalies on entity *E* are denoted as a multidimensional vector *X*, which may comprise:
- values of the entity E (in the case of causal models, only historical values are generally considered, but there may be retrospective use cases where all values of E are considered), and
- a difference between the forecasted value as given by the forecasting model and the observed value. Other statistical measures (such as z-score) that may be associated with this difference and other differences between forecasts and observed other sources of information, such as:
   ∘ different entities *E*_{{others}} that are deemed to be correlated with *E*; and
   ∘ metadata information about *E*, such as data consumer information.

The concatenation of all these features into a multidimensional feature vector is denoted by *X*, which are input to the anomaly detection condition tuner 110 to predict tuned anomaly detection conditions (e.g., for a given consumer). Both *X*(i), as well as the vector of conditions T(*i*), depend on index i, which can index individual detected anomalies, corresponding anomaly detection conditions, and corresponding consumer feedback. In summary, the signature of the existing anomaly detection model *M* for an entity *E* at index i is such that:
*M*(X, T, i) => anomaly raised or not for entity *E* at index i

FIG. 2 illustrates an example anomaly detection system 200 with more details than shown in FIG. 1. An input data set 202 includes data points, events, measurements, observations, etc. For example, the input data set 202 may include production data for microelectronic chip manufacturing, such as the number of chips started each date, the number of chips manufactured each day, the daily yield, etc. It should be understood, however, that the input data need not be a time series and may be allocated against other metrics, such as parts-per-million, car accidents per zip code, etc.

The input data set 202 is input to an anomaly detection model 204 designed to identify patterns or instances in data that deviate significantly from the expected behavior. The output of the anomaly detection model 204 is an anomaly detection alarm 206, which indicates that an anomaly was detected in the input data set 202.

An anomaly feedback collector 208 collects anomaly detection feedback 210, which can be user-provided and/or generated by automated systems, and passes the anomaly detection feedback 210 as input to an anomaly detection condition tuning model generator 212. As described with respect to FIG. 1, other parameters may be input from the anomaly detection alarm 206 or other sources, such as the anomaly detection model 204 and the input data set 202 itself.

Accordingly, the anomaly detection condition tuning model generator 212 receives consumer data feature vectors (Xᵢ), such as data features from the input data set 202 and deltas between predicted and actual features from the anomaly detection model 204, and anomaly detection condition vectors (Tᵢ) applied during the execution of the anomaly detection model 204 on the input data set 202, as illustrated in Table 1 and collectively referred to as telemetry data.

**Table 1 - Telemetry Data as Training Data**

| Features Xᵢ | Conditions Tᵢ | Feedback Yᵢ |
|---|---|---|
| X₁ | T₁ | Y₁ |
| X₂ | T₂ | Y₂ |
| ... | ... | ... |

The anomaly detection condition tuning model generator 212 uses the telemetry data to train an anomaly detection condition tuning model 214, represented as classification model B_{(trained)}, to best predict the feedback (Yᵢ) applied to the corresponding feature vectors (Xᵢ) and condition vectors (Tᵢ) in the telemetry data (as the training data). Accordingly, in at least one implementation, the anomaly detection condition tuning model 214 is trained by the anomaly detection condition tuning model generator 212 using the training data shown in FIG. 1:
- Feature vectors (Xᵢ) and condition vectors (Tᵢ) - input data for a detected anomaly
- Target - feedback (Yᵢ) (e.g., a binary designation as a true anomaly or a false anomaly

The anomaly detection condition tuning model 214 can be implemented using a variety of artificial intelligence classification models, such as a tree-based model (e.g., XGBoost). As such, after the anomaly detection condition tuning model generator 212 trains the anomaly detection condition tuning model 214 using the training data, including the feature vectors (Xᵢ), the condition vectors (Tᵢ), and the feedback (Yᵢ), the anomaly detection condition tuning model 214 is trained to predict user feedback, as denoted by B_{(trained)}(X, T)⇒ Y.

In one implementation, the anomaly detection condition tuning model 214 is a supervised binary classification model trained based on the telemetry data to extract the anomaly detection conditions applied by the anomaly detection model 204. During the training, a loss function (e.g., a binary cross-entropy loss function) pertaining to the feedback (Yᵢ) for a given feature vector (Xᵢ) and given condition vector (Tᵢ) is minimized. In this manner, the anomaly detection condition tuning model 214 is trained to extract tuned training data conditions 216 (T_{i(tuned)}) (e.g., a vector) for each tuple of a given feature vector (Xᵢ), given condition vector (Tᵢ), and a given feedback (Yᵢ) as described below.

After the anomaly detection condition tuning model 214 has been trained by the anomaly detection condition tuning model generator 212 using the telemetry data, the anomaly detection condition tuning model 214 extracts a tuned anomaly detection condition vector (T_{i(tuned)}) for each pairing of a given feature vector (Xᵢ) and a given condition vector (Tᵢ) (see the tuned training data conditions 216):
- For each sample, Xᵢ, Ti, and Yi, the trained model B_{(trained)} is executed.
- If Yᵢ=1, indicating a relevant anomaly based on feedback, predict a new anomaly detection condition T_{i(tuned)} that gives the highest probability from B(trained) that gets the closest to 1 => T_{i(tuned)}=argmax_{Ti} B(trained)(Xi, Ti).
- If Yᵢ=0, indicating no relevant anomaly based on feedback, predict a new anomaly detection condition T_{i(tuned)} that gives the highest probability from B(trained) that gets the closest to 0 => T_{i(tuned)}=argmin_{Ti} B(trained)(Xi, Ti).

Both optimization problems (e.g., corresponding to Yᵢ=1 and Yᵢ=0) are the opposite of each other and, therefore, can be solved via the same technique. As a gradient-free low-dimensional (Tᵢ is at most of dimension of two) non-convex optimization problem, there are numerous methods (such as simulated annealing as the prominent candidates) that may be leveraged to solve the optimization task. (Other methods may include Bayesian optimization, genetic algorithms, etc.). Such optimization may be solved offline, so there is no strong sense of latency constraints.

Example results of the execution of the anomaly detection condition tuning model 214 on unlabeled input data, including new features (Xᵢ) and conditions (Tᵢ) as shown below (as the tuned training data conditions 216), wherein tuned conditions T_{i{tuned)} below represent tuned conditions as applied to the training data:

**Table 2 - Tuned Conditions based on Training Data**

| Features Xᵢ | Tuned Conditions T_{i{tuned)} |
|---|---|
| X₁ | T_{1 tuned)} |
| X₂ | T_{2 tuned)} |
| ... | ... |

However, the tuned conditions of Table 2 (the tuned training data conditions 216) are based on the training data, not new input data. Accordingly, a next stage in tuning anomaly detection conditions for new input data trains a regression model (e.g., for features X of arbitrary input data, what are the tuned anomaly detection conditions that, for example, maximize the prediction of a true anomaly and minimize the predication of a false anomaly). As such, in at least one implementation, the trained regression model is trained to predict anomaly detection conditions that are tuned to cause the anomaly detection model 204 to maximize the identification of anomalies that are in agreement with the expected user feedback (either positive or negative).

Accordingly, the tuned training data conditions 216 are input to a regression model generator 218, which trains a tuned condition regression model 220 using new input data of the input data set 202 and the tuned training data conditions 216. The result of this training is a regression model (the tuned condition regression model 220) that predicts tuned anomaly detection conditions 222 for a given set of new input data, denoted as R(X) => T_{i(tuned)*} for a new input data in the input data set 202, wherein the asterisk indicates the tuned anomaly detection conditions correspond to a given set of new input data rather than to training data.

Thus, the anomaly detection conditions 222 generated by the tuned condition regression model 220 are input to the anomaly detection model 204 for anomaly detection operations on the new input data of the input data set 202. Because the tuned training data conditions 216 have been tuned for individual features (Xᵢ) based on feedback (Yᵢ) and further based on the specific new input data being processed, execution of the anomaly detection model 204 on the new input data using the anomaly detection conditions 222 is expected to identify in the new input data a set of possible anomalies including fewer false anomalies. A technical benefit of this system is that fewer human and/or computer resources need to be devoted to processing false anomalies (e.g., filtering them out from the true anomalies). While false anomalies may still be identified, a larger percentage of identified anomalies will be true, reducing the overhead of processing false alarms and increasing the focus of resources on true alarms.

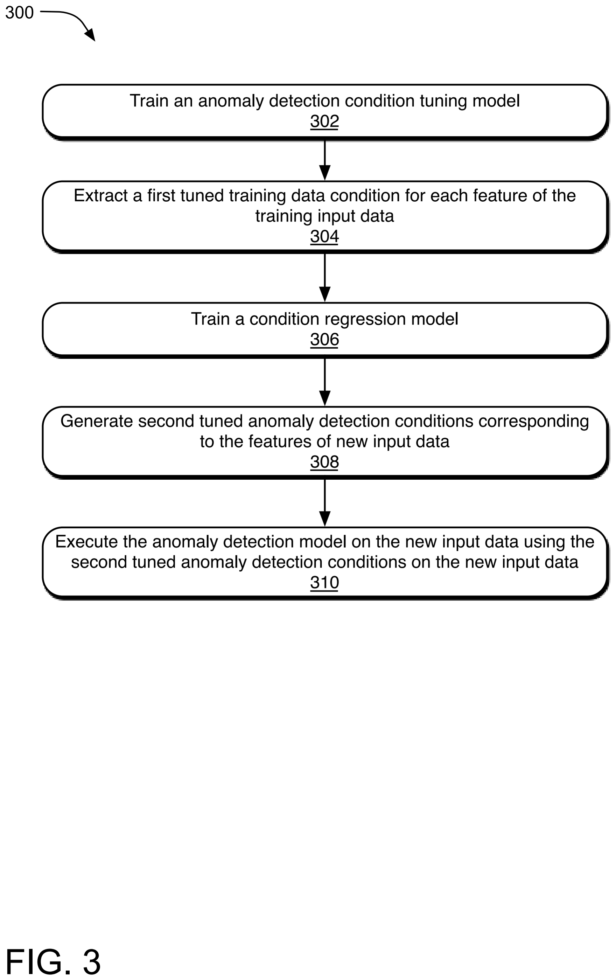

FIG. 3 illustrates example operations 300 for tuning an anomaly detection model in a computerized method. A training operation 302 trains an anomaly detection condition tuning model using first training data, including, without limitation:
- features of training input data provided to the anomaly detection model,
- training anomaly detection conditions used by the anomaly detection model to identify a detected anomaly in the training input data, and
- training data feedback identifying the detected anomaly in the training input data as true or false.

In some implementations, each first tuned training data condition is tuned to generate predicted feedback from the anomaly detection condition tuning model that most closely approximates the training data feedback corresponding to the features of the training input data. Furthermore, in some implementations, the anomaly detection condition tuning model is a supervised machine learning model, and the features of the training input data and the training anomaly detection conditions are features of the first training data and training data feedback is a target of the first training data. The anomaly detection condition tuning model is a tree-based, supervised machine learning model in some example implementations. The features of the training input data, the training anomaly detection conditions, and the training data feedback may be embedded as vectors in a vector space for input to the computerized method.

An extracting operation 304 extracts a first tuned training data condition for each feature of the training input data by executing the anomaly detection condition tuning model, after training, on the features of the training input data. Another training operation 306 trains a condition regression model using second training data, including the features of the training input data and each first tuned training data condition corresponding to the features of the training input data. A generating operation 308 generates second tuned anomaly detection conditions corresponding to the features of new input data by executing the condition regression model, after training, on the new input data.

An anomaly detecting operation 310 executes the anomaly detection model on the new input data using the second tuned anomaly detection conditions generated by the condition regression model on the new input data to identify an anomaly in the new input data. In various operations, extracting the first tuned training data condition for each feature of the training input data having training feedback indicating a true anomaly executes the condition regression model on each feature of the training input data to extract the first tuned training data condition for each feature of the training input data that maximizes the predicted feedback. Furthermore, in various operations, extracting the first tuned training data condition for each feature of the training input data having training feedback indicating a false anomaly includes executing the condition regression model on each feature of the training input data to extract the first tuned training data condition for each feature of the training input data that minimizes the predicted feedback.

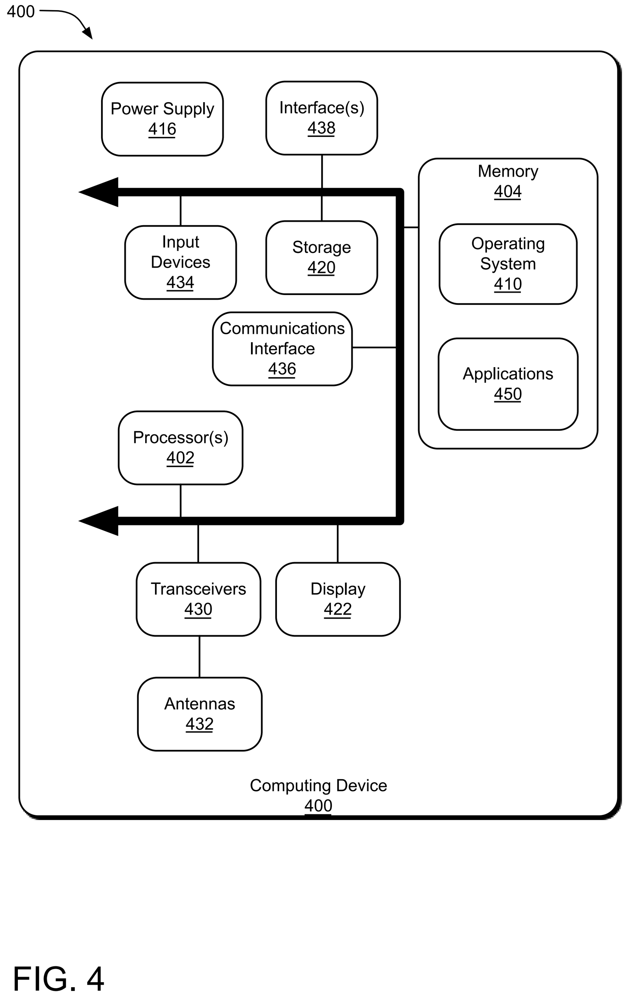

FIG. 4 illustrates an example computing device 400 for use in implementing the described technology. The computing device 400 may be a client computing device (such as a laptop computer, a desktop computer, or a tablet computer), a server/cloud computing device, an Internet-of-Things (IoT), any other type of computing device, or a combination of these options. The computing device 400 includes one or more hardware processor(s) 402 and a memory 404. The memory 404 generally includes both volatile memory (e.g., RAM) and nonvolatile memory (e.g., flash memory), although one or the other type of memory may be omitted. An operating system 410 resides in the memory 404 and is executed by the processor(s) 402. In some implementations, the computing device 400 includes and/or is communicatively coupled to storage 420.

In the example computing device 400, as shown in FIG. 4, one or more software modules, segments, and/or processors, such as applications 450, an anomaly detection model, an anomaly feedback collector, an anomaly detection condition tuning model generator, an anomaly detection condition tuning model, a regression model generator, a tuned condition regression model, and other program code and modules are loaded into the operating system 410 on the memory 404 and/or the storage 420 and executed by the processor(s) 402. The storage 420 may store a input data set, an anomaly detection alarm, features of the input data set, anomaly detection conditions, anomaly detection feedback, tuned training data conditions, tuned anomaly detection conditions, and other data and be local to the computing device 400 or may be remote and communicatively connected to the computing device 400. In particular, in one implementation, components of a system for tuning an anomaly detection model may be implemented entirely in hardware or in a combination of hardware circuitry and software.

The computing device 400 includes a power supply 416, which may include or be connected to one or more batteries or other power sources, and which provides power to other components of the computing device 400. The power supply 416 may also be connected to an external power source that overrides or recharges the built-in batteries or other power sources.

The computing device 400 may include one or more communication transceivers 430, which may be connected to one or more antenna(s) 432 to provide network connectivity (e.g., mobile phone network, Wi-Fi^{®}, Bluetooth^{®}) to one or more other servers, client devices, IoT devices, and other computing and communications devices. The computing device 400 may further include a communications interface 436 (such as a network adapter or an I/O port, which are types of communication devices). The computing device 400 may use the adapter and any other types of communication devices for establishing connections over a wide-area network (WAN) or local-area network (LAN). It should be appreciated that the network connections shown are exemplary and that other communications devices and means for establishing a communications link between the computing device 400 and other devices may be used.

The computing device 400 may include one or more input devices 434 such that a user may enter commands and information (e.g., a keyboard, trackpad, or mouse). These and other input devices may be coupled to the server by one or more interfaces 438, such as a serial port interface, parallel port, or universal serial bus (USB). The computing device 400 may further include a display 422, such as a touchscreen display.

The computing device 400 may include a variety of tangible processor-readable storage media and intangible processor-readable communication signals. Tangible processor-readable storage can be embodied by any available media that can be accessed by the computing device 400 and can include both volatile and nonvolatile storage media and removable and non-removable storage media. Tangible processor-readable storage media excludes intangible and transitory communications signals (such as signals per se) and includes volatile and nonvolatile, removable and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 400. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Clause 1. A computerized method of tuning an anomaly detection model, the computerized method comprising: training an anomaly detection condition tuning model using first training data including features of training input data provided to the anomaly detection model, training anomaly detection conditions used by the anomaly detection model to identify a detected anomaly in the training input data, and training data feedback identifying the detected anomaly in the training input data as true or false; extracting a first tuned training data condition for each feature of the training input data by executing the anomaly detection condition tuning model, after training, on the features of the training input data; training a condition regression model using second training data including the features of the training input data and each first tuned training data condition corresponding to the features of the training input data; and generating second tuned anomaly detection conditions corresponding to the features of new input data by executing the condition regression model, after training, on the new input data.

Clause 2. The computerized method of clause 1, further comprising: executing the anomaly detection model on the new input data using the second tuned anomaly detection conditions generated by the condition regression model to identify an anomaly in the new input data.

Clause 3. The computerized method of clause 1, wherein each first tuned training data condition is tuned to generate predicted feedback from the anomaly detection condition tuning model that most closely approximates the training data feedback corresponding to the features of the training input data.

Clause 4. The computerized method of clause 3, wherein extracting the first tuned training data condition for each feature of the training input data having training feedback indicating a true anomaly comprises: executing the condition regression model on each feature of the training input data to extract the first tuned training data condition for each feature of the training input data that maximizes the predicted feedback.

Clause 5. The computerized method of clause 3, wherein extracting the first tuned training data condition for each feature of the training input data having training feedback indicating a false anomaly comprises: executing the condition regression model on each feature of the training input data to extract the first tuned training data condition for each feature of the training input data that minimizes the predicted feedback.

Clause 6. The computerized method of clause 1, wherein the anomaly detection condition tuning model is a supervised machine learning model and the features of the training input data and the training anomaly detection conditions are features of the first training data and training data feedback is a target of the first training data.

Clause 7. The computerized method of clause 1, wherein the features of the training input data, the training anomaly detection conditions, and the training data feedback are embedded as vectors in a vector space for input to the computerized method.

Clause 8. A computing system for tuning an anomaly detection model, the computing system comprising: one or more hardware processors; memory; an anomaly detection condition tuning model stored in the memory and executable by the one or more hardware processors; an anomaly detection condition tuning model generator stored in the memory, executable by the one or more hardware processors, and configured to train the anomaly detection condition tuning model using first training data including features of training input data provided to the anomaly detection model, training anomaly detection conditions used by the anomaly detection model to identify a detected anomaly in the training input data, and training data feedback identifying the detected anomaly in the training input data as true or false, wherein the anomaly detection condition tuning model is trained to extract a first tuned training data condition for each feature of the training input data by executing the anomaly detection condition tuning model, after training, on the features of the training input data; a condition regression model stored in the memory and executable by the one or more hardware processors; and a regression model generator stored in the memory, executable by the one or more hardware processors, and configured to train the condition regression model using second training data including the features of the training input data and each first tuned training data condition corresponding to the features of the training input data, wherein the condition regression model is trained to generate second tuned anomaly detection conditions corresponding to the features of new input data by executing the condition regression model, after training, on the new input data, wherein the anomaly detection model is configured to execute on the new input data using the second tuned anomaly detection conditions generated by the condition regression model to identify an anomaly in the new input data.

Clause 9. The computing system of clause 8, wherein each first tuned training data condition is tuned to generate predicted feedback from the anomaly detection condition tuning model that most closely approximates the training data feedback corresponding to the features of the training input data.

Clause 10. The computing system of clause 9, wherein extracting the first tuned training data condition for each feature of the training input data having training feedback indicating a true anomaly comprises: executing the condition regression model on each feature of the training input data to extract the first tuned training data condition for each feature of the training input data that maximizes the predicted feedback.

Clause 11. The computing system of clause 9, wherein extracting the first tuned training data condition for each feature of the training input data having training feedback indicating a false anomaly comprises: executing the condition regression model on each feature of the training input data to extract the first tuned training data condition for each feature of the training input data that minimizes the predicted feedback.

Clause 12. The computing system of clause 8, wherein the anomaly detection condition tuning model is a supervised machine learning model and the features of the training input data and the training anomaly detection conditions are features of the first training data and the training data feedback is a target of the first training data.

Clause 13. The computing system of clause 8, wherein the anomaly detection condition tuning model is a tree-based, supervised machine learning model.

Clause 14. The computing system of clause 8, wherein the features of the training input data, the training anomaly detection conditions, and the training data feedback are embedded as vectors in a vector space for input to the computing system.

Clause 15. One or more tangible processor-readable storage media embodied with instructions for executing on one or more processors and circuits of a computing device a process for tuning an anomaly detection model, the process comprising: extracting a first tuned training data condition for each feature of training input data by executing an anomaly detection condition tuning model on features of the training input data, wherein the anomaly detection condition tuning model is trained using first training data including the features of the training input data provided to the anomaly detection model, training anomaly detection conditions used by the anomaly detection model to identify a detected anomaly in the training input data, and training data feedback identifying the detected anomaly in the training input data as true or false; and generating second tuned anomaly detection conditions corresponding to the features of new input data by executing a condition regression model on the new input data, wherein a condition regression model is trained using second training data including the features of the training input data and each first tuned training data condition corresponding to the features of the training input data.

Clause 16. The one or more tangible processor-readable storage media of clause 15, further comprising: executing the anomaly detection model on the new input data using the second tuned anomaly detection conditions generated by the condition regression model to identify an anomaly in the new input data.

Clause 17. The one or more tangible processor-readable storage media of clause 15, wherein each first tuned training data condition is tuned to generate predicted feedback from the anomaly detection condition tuning model that most closely approximates the training data feedback corresponding to the features of the training input data.

Clause 18. The one or more tangible processor-readable storage media of clause 17, wherein extracting the first tuned training data condition for each feature of the training input data having training feedback indicating a true anomaly comprises: executing the condition regression model on each feature of the training input data to extract the first tuned training data condition for each feature of the training input data that maximizes the predicted feedback.

Clause 19. The one or more tangible processor-readable storage media of clause 17, wherein extracting the first tuned training data condition for each feature of the training input data having training feedback indicating a false anomaly comprises: executing the condition regression model on each feature of the training input data to extract the first tuned training data condition for each feature of the training input data that minimizes the predicted feedback.

Clause 20. The one or more tangible processor-readable storage media of clause 15, wherein the anomaly detection condition tuning model is a supervised machine learning model and the features of training input data and the training anomaly detection conditions are features of the first training data and training data feedback is a target of the first training data.

Clause 21. A computerized system of tuning an anomaly detection model, the computerized system comprising: means for training an anomaly detection condition tuning model using first training data including features of training input data provided to the anomaly detection model, training anomaly detection conditions used by the anomaly detection model to identify a detected anomaly in the training input data, and training data feedback identifying the detected anomaly in the training input data as true or false; means for extracting a first tuned training data condition for each feature of the training input data by executing the anomaly detection condition tuning model, after training, on the features of the training input data; means for training a condition regression model using second training data including the features of the training input data and each first tuned training data condition corresponding to the features of the training input data; and means for generating second tuned anomaly detection conditions corresponding to the features of new input data by executing the condition regression model, after training, on the new input data.

Clause 22. The computerized system of clause 21, further comprising: means for executing the anomaly detection model on the new input data using the second tuned anomaly detection conditions generated by the condition regression model to identify an anomaly in the new input data.

Clause 23. The computerized system of clause 21, wherein each first tuned training data condition is tuned to generate predicted feedback from the anomaly detection condition tuning model that most closely approximates the training data feedback corresponding to the features of the training input data.

Clause 24. The computerized system of clause 23, wherein the means for extracting the first tuned training data condition for each feature of the training input data having training feedback indicating a true anomaly comprises: means for executing the condition regression model on each feature of the training input data to extract the first tuned training data condition for each feature of the training input data that maximizes the predicted feedback.

Clause 25. The computerized system of clause 23, wherein the means for extracting the first tuned training data condition for each feature of the training input data having training feedback indicating a false anomaly comprises: means for executing the condition regression model on each feature of the training input data to extract the first tuned training data condition for each feature of the training input data that minimizes the predicted feedback.

Clause 26. The computerized system of clause 21, wherein the anomaly detection condition tuning model is a supervised machine learning model and the features of the training input data and the training anomaly detection conditions are features of the first training data and training data feedback is a target of the first training data.

Clause 27. The computerized system of clause 21, wherein the features of the training input data, the training anomaly detection conditions, and the training data feedback are embedded as vectors in a vector space for input to the computerized method.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

## Claims

1. A computerized method (300) of tuning an anomaly detection model (204) (104), the computerized method (300) comprising:
training (302) an anomaly detection condition tuning model (214) using first training data including features of training input data provided to the anomaly detection model (204) (104), training anomaly detection conditions (222) used by the anomaly detection model (204) (104) to identify a detected anomaly in the training input data, and training data feedback identifying the detected anomaly in the training input data as true or false;
extracting (304) a first tuned training data condition for each feature of the training input data by executing the anomaly detection condition tuning model (214), after training, on the features of the training input data;
training (306) a condition regression model using second training data including the features of the training input data and each first tuned training data condition corresponding to the features of the training input data; and
generating (308) second tuned anomaly detection conditions (222) (112) corresponding to the features of new input data by executing the condition regression model, after training, on the new input data.

2. The computerized method of claim 1, further comprising:
executing the anomaly detection model on the new input data using the second tuned anomaly detection conditions generated by the condition regression model to identify an anomaly in the new input data.

3. The computerized method of claim 1 or claim 2, wherein each first tuned training data condition is tuned to generate predicted feedback from the anomaly detection condition tuning model that most closely approximates the training data feedback corresponding to the features of the training input data.

4. The computerized method of claim 3, wherein extracting the first tuned training data condition for each feature of the training input data having training feedback indicating a true anomaly comprises:
executing the condition regression model on each feature of the training input data to extract the first tuned training data condition for each feature of the training input data that maximizes the predicted feedback.

5. The computerized method of claim 3, wherein extracting the first tuned training data condition for each feature of the training input data having training feedback indicating a false anomaly comprises:
executing the condition regression model on each feature of the training input data to extract the first tuned training data condition for each feature of the training input data that minimizes the predicted feedback.

6. The computerized method of any preceding claim, wherein the anomaly detection condition tuning model is a supervised machine learning model and the features of the training input data and the training anomaly detection conditions are features of the first training data and training data feedback is a target of the first training data.

7. The computerized method of any preceding claim, wherein the features of the training input data, the training anomaly detection conditions, and the training data feedback are embedded as vectors in a vector space for input to the computerized method.

8. A computing system (100) for tuning an anomaly detection model (204) (104), the computing system (100) comprising:
one or more hardware processors (402);
memory (404);
an anomaly detection condition tuning model (214) stored in the memory (404) and executable by the one or more hardware processors (402);
an anomaly detection condition tuning model (214) generator (212) stored in the memory (404), executable by the one or more hardware processors (402), and configured to train (302) the anomaly detection condition tuning model (214) using first training data including features of training input data provided to the anomaly detection model (204) (104), training anomaly detection conditions (222) used by the anomaly detection model (204) (104) to identify a detected anomaly in the training input data, and training data feedback identifying the detected anomaly in the training input data as true or false, wherein the anomaly detection condition tuning model (214) is trained to extract (304) a first tuned training data condition for each feature of the training input data by executing the anomaly detection condition tuning model (214), after training, on the features of the training input data;
a condition regression model stored in the memory (404) and executable by the one or more hardware processors (402); and
a regression model generator (218) stored in the memory (404), executable by the one or more hardware processors (402), and configured to train (306) the condition regression model using second training data including the features of the training input data and each first tuned training data condition corresponding to the features of the training input data, wherein the condition regression model is trained to generate (308) second tuned anomaly detection conditions (222) (112) corresponding to the features of new input data by executing the condition regression model, after training, on the new input data, wherein the anomaly detection model (204) (104) is configured to execute (310) on the new input data using the second tuned anomaly detection conditions (222) (112) generated by the condition regression model to identify an anomaly in the new input data.

9. The computing system of claim 8, wherein each first tuned training data condition is tuned to generate predicted feedback from the anomaly detection condition tuning model that most closely approximates the training data feedback corresponding to the features of the training input data.

10. The computing system of claim 9, wherein extracting the first tuned training data condition for each feature of the training input data having training feedback indicating a true anomaly comprises:
executing the condition regression model on each feature of the training input data to extract the first tuned training data condition for each feature of the training input data that maximizes the predicted feedback.

11. The computing system of claim 9, wherein extracting the first tuned training data condition for each feature of the training input data having training feedback indicating a false anomaly comprises:
executing the condition regression model on each feature of the training input data to extract the first tuned training data condition for each feature of the training input data that minimizes the predicted feedback.

12. The computing system of any of claims 8 to 11, wherein the anomaly detection condition tuning model is a supervised machine learning model and the features of the training input data and the training anomaly detection conditions are features of the first training data and the training data feedback is a target of the first training data.

13. The computing system of any of claims 8 to 12, wherein the anomaly detection condition tuning model is a tree-based, supervised machine learning model.

14. The computing system of any of claims 8 to 13, wherein the features of the training input data, the training anomaly detection conditions, and the training data feedback are embedded as vectors in a vector space for input to the computing system.

15. One or more tangible processor-readable storage (420) media embodied with instructions for executing on one or more processors (402) and circuits of a computing device (400) a process (300) for tuning an anomaly detection model (204) (104), the process (300) comprising:
extracting (304) a first tuned training data condition for each feature of training input data by executing an anomaly detection condition tuning model (214) on features of the training input data, wherein the anomaly detection condition tuning model (214) is trained (302) using first training data including the features of the training input data provided to the anomaly detection model (204) (104), training anomaly detection conditions (222) used by the anomaly detection model (204) (104) to identify a detected anomaly in the training input data, and training data feedback identifying the detected anomaly in the training input data as true or false; and
generating (308) second tuned anomaly detection conditions (222) (112) corresponding to the features of new input data by executing a condition regression model on the new input data, wherein a condition regression model is trained (306) using second training data including the features of the training input data and each first tuned training data condition corresponding to the features of the training input data.
